# EUROPÄISCHE PATENTANMELDUNG

(11) **EP 0 590 405 A1**
(43) Veröffentlichungstag der Anmeldung: **06.04.1994**
(21) Anmeldenummer: 93114716.9
(22) Anmeldetag: 14.09.1993
(51) Int. Cl.: B32B 5/18, E01F 9/01

(54) **Bahnenmaterial mit einer Trägerschicht aus Schaumstoff**

(30) Priorität: 02.10.1992 DE 9213269 U
(71) Anmelder: E. DITTRICH KG "Schlüssel"-Erzeugnisse, D-28307 Bremen (DE)
(72) Erfinder: Dittrich,Klaus-Jürgen, D-28831 Achim (DE)
(74) Vertreter: Eisenführ, Speiser & Partner

(57) **Zusammenfassung**

Es wird ein Bahnenmaterial mit einer Trägerschicht aus Schaumstoff angegeben, welches ein Reflexionsmaterial auf der Trägerschicht und eine transparente Schutzschicht über dem Reflexionsmaterial aufweist. Das Bahnenmaterial eignet sich insbesondere zur Herstellung von Leitkegeln für die Straßenabmarkierung.

## Beschreibung

Die Erfindung betrifft ein Bahnenmaterial mit einer Trägerschicht aus Schaumstoff. Die Erfindung betrifft ferner einen Leitkegel zum Abmarkieren von Fahrbahnen, welcher aus einem derartigen Bahnenmaterial hergestellt ist.

Derartiges Bahnenmaterial ist in verschiedenen Ausgestaltungen für die verschiedensten Zwecke bekannt. Aus dem Bahnenmaterial werden Zuschnitte geschnitten, die dann zu den verschiedenen Formkörpern verformt werden, wobei eine offenporige oder geschlossenporige Oberfläche, ggfs. auch eine Verhautung der Oberfläche verwirklicht wird.

Aufgabe der Erfindung ist es, ein Bahnenmaterial der eingangs genannten Art derart weiterzubilden, daß weitere Anwendungsbereiche erschlossen werden.

Diese Aufgabe wird bei dem Bahnenmaterial der eingangs genannten Art erfindungsgemäß dadurch gelöst, daß Reflexionsmaterial auf der Trägerschicht, und darüber eine transparente Schutzschicht vorgesehen ist.

Die Vorteile des erfindungsgemäßen Bahnenmaterials liegen insbesondere darin, daß mit diesem Material Formkörper herstellbar sind, welche aufgrund ihres Verwendungszwecks eine lichtreflektierende Oberfläche aufweisen müssen, und die darüber hinaus auch in freier Umgebung Anwendung finden sollen und daher eine wetterfeste Oberfläche aufweisen müssen. Insbesondere lassen sich mit dem erfindungsgemäßen Bahnenmaterial Verkehrsleiteinrichtungen für den Straßenverkehr in besonders einfacher Weise herstellen, und diese Einrichtungen besitzen dann die gewünschten Eigenschaften der lichtreflektierenden, wetterfesten Oberfläche.

Besonders bevorzugt ist die transparente Schutzschicht als eine Schutzfolie ausgebildet, welche auf die Trägerschicht entweder aufgeschweißt oder aufgeklebt oder in irgendeiner anderen Weise aufkaschiert werden kann. So läßt sich z.B. die Schutzfolie im sogenannten Honeycomb-Verfahren mit einem entsprechenden Stempelmuster aufbringen.

Besonders bevorzugt ist das Reflexionsmaterial auf einer Reflexfolie angeordnet, die auf die Trägerschicht aufkaschiert ist, um den Herstellungsvorgang für das Bahnenmaterial zu vereinfachen.

Die Trägerschicht besteht bevorzugt aus einem Polyolefinschaum, insbesondere auch einem Polyethylenschaum, z.B. einem geschlossenzelligen Schaum, der auch eine verhautete Oberfläche aufweisen kann und vorzugsweise eine Dichte von 25 bis 100 kg/m³ aufweist. Die Trägerschicht hat bevorzugt eine Materialstärke von mehr als 3 mm.

Mit dem erfindungsgemäßen Bahnenmaterial lassen sich erfindungsgemäß Leitkegel zum Abmarkieren von Fahrbahnen herstellen. Zu diesem Zweck wird ein ebener Zuschnitt aus dem Bahnenmaterial ausgeschnitten, anschließend in die Form eines Kegels gebracht und an der Zuschnittnaht in geeigneter Weise verbunden, z.B. verklebt oder verschweißt. Der Fuß eines derartigen Leitkegels besitzt bevorzugt Rastansätze, und der Kegel besitzt an seinem unteren Ende entsprechende Ausnehmungen, in welche die Rastansätze zum Befestigen des Leitkegels eingreifen können. Gegenüber den bekannten Herstellungsverfahren, bei denen entweder eine Reflexfolie in der Spritzform hinterspritzt wird, oder bei der alternativ erst der Kegel aus Trägermaterial, anschließend das Reflexionsmaterial, und anschließend die Schutzfolie aufgebracht wird, besitzt die Herstellung der Leitkegel aus entsprechend vorgefertigtem ebenen Bahnenmaterial erhebliche Vorteile.

Vorteilhafte Weiterbildungen der Erfindung sind durch die Merkmale der Unteransprüche gekennzeichnet.

Im folgenden wird eine Ausführungsform der Erfindung anhand der Zeichnung näher erläutert.

Es zeigen:
- Fig. 1: einen Querschnitt durch eine Ausführungsform des Bahnenmaterials; und
- Fig. 2: einen Querschnitt durch einen aus dem Bahnenmaterial aufgebauten Leitkegel.

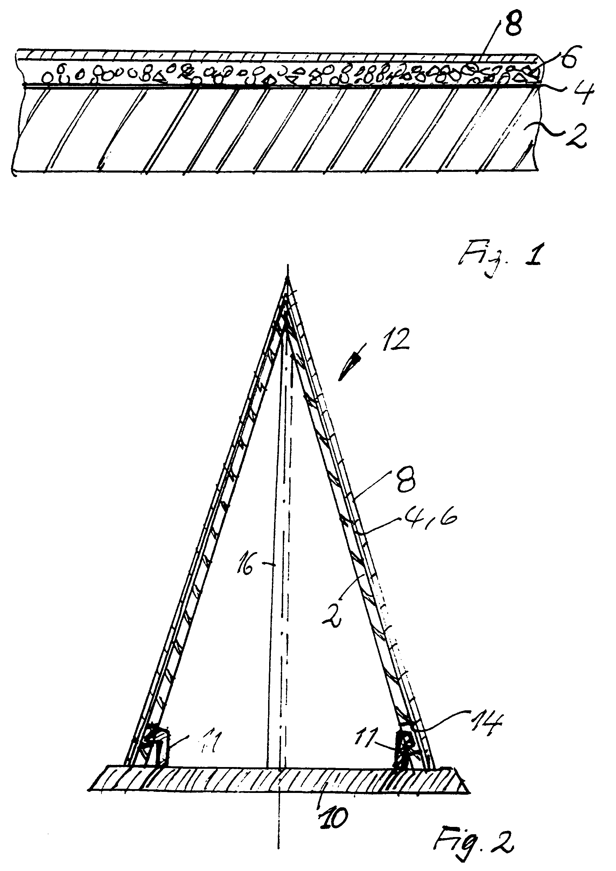

Fig. 1 zeigt einen Querschnitt durch ein Bahnenmaterial, welches eine Trägerschicht 2 aus Schaumstoff, vorzugsweise geschlossenzelliger Polyolefin-Schaum, vorgegebener gleichförmiger Dicke aufweist. Auf die Trägerschicht 2 ist eine Reflexfolie 4 aufkaschiert, die auf ihrer Oberfläche oder in die Folie einintegriert Reflexionsmaterial 6 trägt. Über der Reflexfolie 4 oder dem Reflexionsmaterial 6 befindet sich eine Schutzfolie 8, die aus transparentem Kunststoffmaterial besteht und mit dem darunter liegenden Schichtenverbund durch Kleben oder Verschweißen oder in anderer geeigneter Weise aufkaschiert ist.

Fig. 2 zeigt einen Leitkegel zum Abmarkieren von Fahrbahnen, der einen Fuß 10 und einen auf dem Fuß 10 befestigbaren dünnwandigen Kegel 12 besitzt. Der dünnwandige Kegel 12 besteht aus Bahnenmaterial gemäß Fig. 1, welches die aus Schaumstoff bestehende Trägerschicht 2, darüber eine Reflexfolie 6 und eine äußere transparente Schutzfolie 8 aufweist. Der Kegel 12 ist aus einem ebenen Zuschnitt des Bahnenmaterials erzeugt, der zum Kegel geformt ist, wobei zwei einander gegenüberliegende Kanten des Zuschnitts an einer Längsnaht 16 miteinander verbunden sind.

Am Fuß 10 des Leitkegels sind Rastansätze 11 angeformt, die in den Hohlraum des Kegels 12 hineinragen und in Ausnehmungen 14 greifen, welche am unteren Ende des Kegels 12 vorgesehen sind, um den Fuß 10 mit dem Kegel 12 zu verbinden. Die Verbindung zwischen Kegel 12 und Fuß 10 ist auch mit anderen bekannten Verbindungsmitteln möglich.

## Patentansprüche

1. Bahnenmaterial mit einer Trägerschicht aus Schaumstoff,
gekennzeichnet durch Reflexionsmaterial (6) auf der Trägerschicht (2) und eine transparente Schutzschicht (8) über dem Reflexionsmaterial.

2. Bahnenmaterial nach Anspruch 1,
dadurch gekennzeichnet, daß die transparente Schutzschicht (8) eine Schutzfolie ist.

3. Bahnenmaterial nach Anspruch 2,
dadurch gekennzeichnet, daß die Schutzfolie (8) auf die Trägerschicht (2) aufgeschweißt oder aufgeklebt ist.

4. Bahnenmaterial nach Anspruch 2 oder 3,
dadurch gekennzeichnet, daß die Schutzfolie (8) in einem vorgegebenen Stegmuster mit der Trägerschicht (2) verbunden ist.

5. Bahnenmaterial nach einem der Ansprüche 1 bis 4,
dadurch gekennzeichnet, daß das Reflexionsmaterial (6) auf einer Reflexfolie (4) angeordnet ist, die auf die Trägerschicht (2) aufkaschiert ist.

6. Bahnenmaterial nach einem der Ansprüche 1 bis 5,
dadurch gekennzeichnet, daß die Trägerschicht (2) einen Polyolefinschaum enthält.

7. Leitkegel zum Abmarkieren von Fahrbahnen, mit einem Fuß und einem auf dem Fuß befestigbaren dünnwandigen Kegel,
dadurch gekennzeichnet, daß ein ebener Zuschnitt aus bahnenförmigem Schaumstoffmaterial, welcher auf dem Schaumstoffmaterial ein Reflexionsmaterial und an der Oberfläche eine transparente Schutzfolie trägt, zu dem Kegel (12) geformt ist.

8. Leitkegel nach Anspruch 7,
dadurch gekennzeichnet, daß der ebene Zuschnitt aus einem Bahnenmaterial gemäß den Ansprüchen 1 bis 6 besteht.

9. Leitkegel nach Anspruch 7 oder 8,
dadurch gekennzeichnet, daß der Fuß (10) des Leitkegels Rastansätze (11), und der Kegel (12) an seinem unten offenen Ende Ausnehmungen (14) zum Befestigen des Leitkegels (12) an den Rastansätzen (11) besitzt.
